# EUROPÄISCHE PATENTANMELDUNG

(11) **EP 3 375 803 A1**
(43) Veröffentlichungstag der Anmeldung: **19.09.2018**
(21) Anmeldenummer: 17160752.6
(22) Anmeldetag: 14.03.2017
(51) Int. Cl.: C08G 59/18, C08G 59/50

(54) **HÄRTER FÜR EMISSIONSARME EPOXIDHARZ-ZUSAMMENSETZUNGEN**

(71) Anmelder: SIKA TECHNOLOGY AG, 6340 Baar (CH)
(72) Erfinder: Kasemi, Edis, 8046 Zürich (CH); Kramer, Andreas, 8006 Zürich (CH); Stadelmann, Ursula, 8046 Zürich (CH); Burckhardt, Urs, 8049 Zürich (CH)
(74) Vertreter: Sika Patent Attorneys

(57) **Zusammenfassung**

Die vorliegende Erfindung betrifft einen Härter für Epoxidharze enthaltend mindestens ein Addukt-Amin der Formel (I), welches aus der Adduktierung einer Mischung aus einem primärem Diamin und einem monoalkylierten weiteren Diamin mit einem Polyepoxid erhalten werden kann.

Der erfindungsgemässe Härter ermöglicht geruchs- und emissionsarme Epoxidharz-Produkte, insbesondere Beschichtungen, mit einer überraschend niedrigeren Viskosität, hoher Aushärtungsgeschwindigkeit, hoher Endhärte und überraschend schöner Oberfläche.

## Beschreibung

### Technisches Gebiet

Die Erfindung betrifft das Gebiet der Härter für Epoxidharze und Epoxidharz-Zusammensetzungen, sowie Beschichtungen, Beläge und Anstriche.

### Stand der Technik

Für Beschichtungszwecke geeignete Epoxidharz-Produkte sollen möglichst wenig Verdünner enthalten und dadurch emissionsarm sein, dabei trotzdem eine so niedrige Viskosität aufweisen, dass sie bei Umgebungstemperatur gut verarbeitbar sind. Weiterhin sollen sie nach der Applikation möglichst schnell und störungsfrei aushärten, auch bei feucht-kalten Bedingungen, und dabei eine ebenmässige, glänzende und nichtklebrige Oberfläche ohne Trübungen, Flecken oder Krater ausbilden. Schliesslich soll die erhaltene Beschichtung eine hohe Härte und Beständigkeit besitzen. Für optisch anspruchsvolle Anwendungen, beispielsweise Deckbeläge von Fussböden, soll sie zudem einen hohen Glanzgrad und eine geringe Neigung zum Vergilben unter Lichteinfluss aufweisen.
Aus dem Stand der Technik sind für solche Anwendungen Härter auf der Basis von cycloaliphatischen Diaminen, wie insbesondere IPDA, welche teilweise mit Epoxidharz umgesetzt bzw. adduktiert sind, bekannt. Diese Härter sind aber, je nach Grad der Adduktierung, unerwünscht hochviskos und neigen unter feucht-kalten Bedingungen zu matten Oberflächen und weissen Flecken bei früher Wasserbeaufschlagung. Eine Mitverwendung von Diaminen wie MXDA bei der Adduktierung ermöglicht etwas tiefere Viskositäten, erhöht aber die Neigung zum Vergilben unter Lichteinfluss und/oder verschlechtert die Oberflächenqualität, insbesondere bei der Aushärtung unter feucht-kalten Bedingungen.
Teilweise alkylierte primäre Diamine sind als Härter für Epoxidharze bekannt, beispielsweise aus US 6'562'934, US 8'729'213, WO 2014/108306 und WO 2016/023839. Diese Amine ermöglichen emissionsarme Epoxidharz-Produkte mit guten Eigenschaften. Typischerweise werden sie in freier, nicht adduktierter Form eingesetzt. Es ist auch möglich, sie in adduktierter Form zu verwenden. Solche Addukte weisen zwar eine vergleichsweise niedrige Viskosität auf, die Aushärtungsgeschwindigkeit und die erreichten Endhärten von damit formulierten Epoxidharz-Produkten sind aber oft nicht ausreichend hoch.

### Darstellung der Erfindung

Aufgabe der vorliegenden Erfindung ist es daher, einen Härter für Epoxidharze zur Verfügung zu stellen, welcher möglichst niedrigviskose Epoxidharz-Produkte ermöglicht, die bei Umgebungstemperaturen und insbesondere auch in der Kälte rasch aushärten und dabei hochwertige Beschichtungen mit ebenmässiger, glänzender Oberfläche ermöglichen.
Diese Aufgabe wird mit dem Härter nach Anspruch 1 gelöst. Der Härter enthält mindestens ein gemischtes Addukt-Amin der Formel (I), welches aus der Adduktierung einer Mischung aus primärem Diamin und einem teilweise alkylierten weiteren Diamin mit einem Polyepoxid erhalten werden kann.
Der erfindungsgemässe Härter ermöglicht geruchs- und emissionsarme Epoxidharz-Produkte mit überraschenderweise tieferer Viskosität und überraschend schöner Oberfläche im Vergleich mit Härtern auf der Basis von entsprechenden, separat hergestellten Addukt-Aminen, wobei die übrigen Eigenschaften der damit erhaltenen Epoxidharz-Produkte, wie insbesondere Aushärtungsgeschwindigkeit, Endhärte und Neigung zum Vergilben, vergleichbar gut sind.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter für Epoxidharze enthaltend mindestens ein Addukt-Amin der Formel (I), 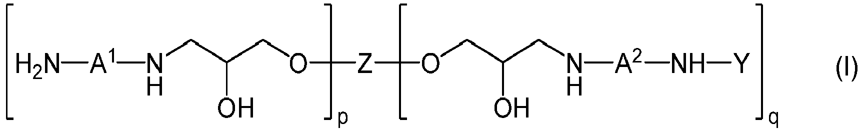 wobei
A¹ für einen Alkylen-Rest mit 6 bis 15 C-Atomen, welcher gegebenenfalls cyclische Anteile und gegebenenfalls sekundäre oder tertiäre Aminogruppen aufweist, steht,
A² für einen von A¹ verschiedenen Alkylen-Rest mit 2 bis 10 C-Atomen steht, Y für einen Alkyl- oder Cycloalkyl- oder Aralkyl-Rest mit 1 bis 20 C-Atomen steht,
Z für einen (p+q)-wertigen, gegebenenfalls Ether-Sauerstoff aufweisenden Kohlenwasserstoff-Rest mit einem Molekulargewicht im Bereich von 56 bis 1'500 g/mol steht, und
p und q unabhängig voneinander für 1 oder 2 oder 3 stehen und (p+q) für 2 oder 3 oder 4 steht.

Als "primäre Aminogruppe" wird eine Aminogruppe bezeichnet, die an einen einzigen organischen Rest gebunden ist und zwei Wasserstoffatome trägt; als "sekundäre Aminogruppe" wird eine Aminogruppe bezeichnet, die an zwei organische Reste, welche auch gemeinsam Teil eines Rings sein können, gebunden ist und ein Wasserstoffatom trägt; und als "tertiäre Aminogruppe" wird eine Aminogruppe bezeichnet, die an drei organische Reste, welche auch zu zweit oder zu dritt Teil eines oder mehrerer Ringe sein können, gebunden ist und kein Wasserstoffatom trägt.
Als "Aminwasserstoff" werden die Wasserstoffatome von primären und sekundären Aminogruppen bezeichnet.
Als "Aminwasserstoff-Equivalentgewicht" wird die Masse eines Amins oder einer Amin-haltigen Zusammensetzung, die ein Molequivalent Aminwasserstoff enthält, bezeichnet.
Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "Verdünner" wird eine in einem Epoxidharz lösliche und dessen Viskosität senkende Substanz bezeichnet, welche bei der Aushärtung chemisch nicht in das Epoxid-Polymer eingebunden wird.
Als "Viskosität" wird die dynamische Viskosität oder Scherviskosität bezeichnet, welche durch das Verhältnis zwischen der Schubspannung und der Scherrate (Geschwindigkeitsgefälle) definiert ist und wie in der Beschreibung bzw. den Ausführungsbeispielen beschrieben bestimmt wird.
Als "Molekulargewicht" wird die molare Masse (in Gramm pro Mol) eines Moleküls bezeichnet. Als "mittleres Molekulargewicht" wird das Zahlenmittel Mₙ einer polydispersen Mischung von oligomeren oder polymeren Molekülen bezeichnet, welches üblicherweise mittels Gelpermeationschromatographie (GPC) gegen Polystyrol als Standard bestimmt wird.
Als "Raumtemperatur" wird eine Temperatur von 23 °C bezeichnet.
Eine gestrichelte Linie in den Formeln stellt jeweils die Bindung zwischen einem Substituenten und dem zugehörigen Molekülrest dar.

Bevorzugt steht A¹ für einen Alkylen-Rest mit 6 bis 12 C-Atomen, welcher gegebenenfalls cyclische Anteile und gegebenenfalls sekundäre oder tertiäre Aminogruppen aufweist.

Besonders bevorzugt ist A¹ ausgewählt aus der Gruppe bestehend aus 2-Methyl-1,5-pentylen, 1,6-Hexylen, 2,2(4),4-Trimethyl-1,6-hexamethylen, 1,3-Cyclohexylen-bis(methylen), 1,4-Cyclohexylen-bis(methylen), 1,3-Phenylen-bis-(methylen), 1,4-Phenylen-bis(methylen), 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 3-Aza-1,5-pentylen, 3,6-Diaza-1,8-octylen, 3,6,9-Triaza-1,11-undecylen, 3,6,9,12-Tetraaza-1,14-tetradecylen, 3,6,9,12,15-Pentaaza-1,17-heptadecylen, 4-Aza-2,6-heptylen, 4-Aza-1,7-heptylen, 4,7-Diaza-1,10-decylen und 7-Aza-1,13-tridecylen.
Davon bevorzugt ist 2-Methyl-1,5-pentylen, 2,2(4),4-Trimethyl-1,6-hexamethy-len, 1,3-Cyclohexylen-bis(methylen), 1,4-Cyclohexylen-bis(methylen), 1,3-Phenylen-bis(methylen), 1,4-Phenylen-bis(methylen), (1,5,5-Trimethylcyclohexan-1-yl)methan-1,3, 4(2)-Methyl-1,3-cyclohexylen, 3-Aza-1,5-pentylen, 3,6-Diaza-1,8-octylen, 3,6,9-Triaza-1,11-undecylen, 4-Aza-1,7-heptylen und 4,7-Diaza-1,10-decylen. Diese Reste A¹ sind einfach verfügbar und ermöglichen Epoxidharz-Produkte mit schneller Aushärtung und sehr hoher Endfestigkeit.

Insbesondere ist A¹ ausgewählt aus der Gruppe bestehend aus 2,2(4),4-Trimethyl-1,6-hexamethylen, 1,3-Cyclohexylen-bis(methylen), (1,5,5-Trimethylcyclohexan-1-yl)methan-1,3 und 4(2)-Methyl-1,3-cyclohexylen. Diese Reste A¹ ermöglichen Epoxidharz-Produkte mit besonders wenig Neigung zum Vergilben.

Am meisten bevorzugt steht A¹ für (1,5,5-Trimethylcyclohexan-1-yl)methan-1,3. Dieser Rest A¹ ermöglicht Epoxidharz-Produkte mit einer besonders attraktiven Kombination aus schneller Aushärtung, hoher Endfestigkeit und guter Oberflächenqualität.

Bevorzugt steht A² für einen Alkylen-Rest mit 2 bis 6, insbesondere 2 oder 3, C-Atomen. Diese Reste A² ermöglichen Epoxidharz-Produkte mit besonders niedriger Viskosität und besonders schönen Oberflächen.

Bevorzugt ist A² ausgewählt aus der Gruppe bestehend aus 1,2-Ethylen, 1,2-Propylen und 2-Methyl-1,5-pentylen.
Besonders bevorzugt steht A² für 1,2-Ethylen oder für 1,2-Propylen, insbesondere für 1,2-Propylen. Diese Reste A² ermöglichen Epoxidharz-Produkte mit ganz besonders guter Verarbeitbarkeit, besonders schneller Aushärtung, besonders schönen Oberflächen und besonders wenig Neigung zum Vergilben.

In einer bevorzugten Ausführungsform der Erfindung steht A² für 1,2-Propylen und A¹ ist ausgewählt aus der Gruppe bestehend aus 2-Methyl-1,5-pentylen, 1,6-Hexylen, 2,2(4),4-Trimethyl-1,6-hexamethylen, 1,3-Cyclohexylen-bis(methylen), 1,4-Cyclohexylen-bis(methylen), 1,3-Phenylen-bis(methylen), 1,4-Phenylen-bis(methylen), 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 3-Aza-1,5-pentylen, 3,6-Diaza-1,8-octylen, 3,6,9-Triaza-1,11-undecylen, 3,6,9,12-Tetraaza-1,14-tetradecylen, 3,6,9,12,15-Pentaaza-1,17-heptadecylen, 4-Aza-2,6-heptylen, 4-Aza-1,7-heptylen, 4,7-Diaza-1,10-decylen und 7-Aza-1,13-tridecylen.
Bevorzugt steht A¹ dabei für 2,2(4),4-Trimethyl-1,6-hexamethylen, 1,3-Cyclohexylen-bis(methylen), (1,5,5-Trimethylcyclohexan-1-yl)methan-1,3 oder 4(2)-Methyl-1,3-cyclohexylen, insbesondere für (1,5,5-Trimethylcyclohexan-1-yl)methan-1,3.

Bevorzugt steht Y für einen Alkyl- oder Cycloalkyl- oder Aralkyl-Rest mit 3 bis 10 C-Atomen.

In einer bevorzugten Ausführungsform steht Y für einen Alkyl-Rest mit 6 bis 10 C-Atomen, insbesondere für 2-Ethylhexyl. Ein solcher Härter ist ganz besonders niedrigviskos und ermöglicht somit Epoxidharz-Produkte mit besonders guter Verarbeitbarkeit.
In einer weiteren bevorzugten Ausführungsform steht Y für 2-Phenylethyl. Ein solcher Härter ist besonders einfach verfügbar.

In einer besonders bevorzugten Ausführungsform steht Y für einen Rest der 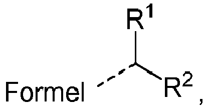 wobei
R¹ für einen Wasserstoff-Rest oder für Methyl oder Phenyl steht, und
R² für einen fünf- oder sechs- oder siebengliedrigen Cycloalkyl- oder Aryl-Rest mit 4 bis 7 C-Atomen steht, der gegebenenfalls Alkyl-substituiert ist.

Bevorzugt steht R¹ für einen Wasserstoff-Rest oder für Methyl, insbesondere für einen Wasserstoff-Rest.
Bevorzugt steht R² für Cyclohexyl, Phenyl oder 1-Naphthyl.

Besonders bevorzugt ist Y ausgewählt aus der Gruppe bestehend aus 2-Ethylhexyl, 2-Phenylethyl, Cyclohexylmethyl, Benzyl, 1-Phenylethyl und 1-Naphthylmethyl.

Ganz besonders bevorzugt steht Y für Benzyl, 1-Phenylethyl oder 1-Naphthylmethyl, am meisten bevorzugt für Benzyl. Ein solcher Härter ist besonders niedrigviskos und ermöglicht besonders gut verarbeitbare Epoxidharz-Produkte mit schneller Aushärtung und besonders schönen Oberflächen.

Bevorzugt steht Z für einen zwei-, drei- oder vierwertigen, gegebenenfalls Ether-Sauerstoff aufweisenden Kohlenwasserstoff-Rest mit einem Molekulargewicht im Bereich von 56 bis 1'000, insbesondere 56 bis 500, g/mol.

Besonders bevorzugt steht Z für den Rest eines zwei-, drei- oder vierwertigen Arylglycidylethers nach Entfernung der Glycidoxygruppen. Ein solcher Härter ermöglicht Epoxidharz-Produkte mit schneller Aushärtung, hoher Härte und schönen Oberflächen.

Insbesondere steht Z für den Rest von Bisphenol-A-Diglycidylether, Bisphenol-F-Diglycidylether, Bisphenol-A/F-Diglycidylether oder Novolak-Glycidylethern nach Entfernung der Glycidoxygruppen.

Dabei ist Z bevorzugt abgeleitet von Bisphenol-A-Flüssigharz, Bisphenol-F-Flüssigharz, Bisphenol- A/F-Flüssigharz oder Phenol-Novolak-Glycidylethern mit einer mittleren Funktionalität im Bereich von 2.5 bis 3.8.

Ganz besonders bevorzugt steht Z für den Rest von Bisphenol-A-Diglycidylether nach Entfernung der Glycidoxygruppen. Ein solcher Härter ist besonders niedrigviskos.

Bevorzugt steht (p+q) für 2. Somit stehen p und q bevorzugt jeweils für 1.

Ein weiterer Gegenstand der Erfindung ist ein Verfahren zur Herstellung des beschriebenen Härters, dadurch gekennzeichnet, dass ein Amingemisch enthaltend mindestens ein Amin der Formel (II) und mindestens ein monoalkyliertes Amin der Formel (III) mit mindestens einem Glycidylether der Formel (IV) umgesetzt wird,

H₂N-A¹-NH2 (II)

H₂-N-A²-NH-Y (III)

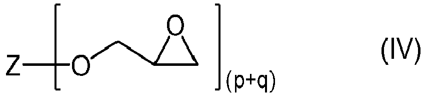

wobei A¹, A², Y, Z, p und q die bereits genannten Bedeutungen aufweisen. Eine solche Umsetzung wird auch als "Adduktierung" bezeichnet.

In diesem Verfahren wird die Umsetzung zwischen dem Amingemisch und dem Glycidylether bevorzugt so geführt, dass die primären Aminogruppen gegenüber den Epoxidgruppen im stöchiometrischen Überschuss vorhanden sind.
Bevorzugt liegt dabei das Molverhältnis der Summe aus Amin der Formel (II) und Amin der Formel (III) gegenüber den Epoxidgruppen im Bereich von 1.5/1 bis 15/1, besonders bevorzugt 2/1 bis 15/1, insbesondere 2.5/1 bis 10/1.

Bevorzugt liegt das Gewichtsverhältnis zwischen dem Amin der Formel (II) und dem Amin der Formel (III) im Bereich von 5/95 bis 95/5, bevorzugt 10/90 bis 90/10, insbesondere 20/80 bis 80/20.

Bevorzugt liegt die Temperatur bei der Umsetzung im Bereich von 40 bis 120 °C, insbesondere 60 bis 100 °C.
Bevorzugt wird das Amingemisch vorgelegt und aufgewärmt und dann der Glycidylether zudosiert, wobei darauf geachtet wird, dass die Temperatur der Reaktionsmischung im genannten Temperaturbereich verbleibt.

Das Amin der Formel (II) ist bevorzugt ausgewählt aus der Gruppe bestehend aus 1,5-Diamino-2-methylpentan (MPMD), 1,6-Hexandiamin, 2,2(4),4-Trimethylhexamethylendiamin (TMD), 1,3-Bis-(aminomethyl)cyclohexan, 1,4-Bis-(aminomethyl)cyclohexan, 1,3-Bis-(aminomethyl)benzol, 1,4-Bis-(aminome-thyl)benzol, 1,2-Diaminocyclohexan, 1,3-Diaminocyclohexan, 1,4-Diaminocy-clohexan, 1-Amino-3-aminomethyl-3,5,5-trimethylcyclohexan (Isophorondiamin oder IPDA), 2- und 4-Methyl-1,3-diaminocyclohexan und Mischungen davon, Diethylentriamin (DETA), Triethylentetramin (TETA), Tetraethylenpentamin (TEPA), Pentaethylenhexamin (PEHA), Dipropylentriamin (DPTA), N-(2-Amino-ethyl)-1,3-propandiamin (N3-Amin), N,N'-Bis(3-aminopropyl)ethylendiamin (N4-Amin) und Bis(hexamethylen)triamin (BHMT).
Besonders bevorzugt ist TMD, 1,3-Bis-(aminomethyl)cyclohexan, IPDA oder 2(4)-Methyl-1,3-diaminocyclohexan.
Am meisten bevorzugt ist IPDA.

Das Amin der Formel (III) ist bevorzugt ausgewählt aus der Gruppe bestehend aus N-Benzyl-1,2-ethandiamin, N¹-Benzyl-1,2-propandiamin oder N²-Benzyl-1,2-propandiamin oder eine Mischung davon, N¹-(1-Phenylethyl)-1,2-propandiamin oder N²-(1-Phenylethyl)-1,2-propandiamin oder eine Mischung davon, N¹-(1-Naphthylmethyl)-1,2-propandiamin oder N²-(1-Naphthylmethyl)-1,2-propandiamin oder eine Mischung davon, N-Benzyl-1,3-propandiamin, N¹-Benzyl-2-methyl-1,5-pentandiamin oder N⁵-Benzyl-2-methyl-1,5-pentandiamin oder eine Mischung davon, N-Benzyl-1,6-hexandiamin, N-Benzyl-1,3-bis(aminome-thyl)cyclohexan, N-Benzyl-1,3-bis(aminomethyl)benzol, N-2-Ethylhexyl-1,3-bis(aminomethyl)benzol und N-(2-Phenylethyl)-1,3-bis(aminomethyl)benzol (Bestandteil von styrolisiertem MXDA, erhältlich als Gaskamine^{®} 240 von Mitsubishi Gas Chemical).
Besonders bevorzugt ist N¹-Benzyl-1,2-propandiamin oder N²-Benzyl-1,2-propandiamin oder eine Mischung davon.

Der Glycidylether der Formel (IV) ist bevorzugt ausgewählt aus Bisphenol-A-Flüssigharzen, Bisphenol-F-Flüssigharzen, Bisphenol-A/F-Flüssigharzen und Phenol-Novolaken mit einer mittleren Funktionalität im Bereich von 2.5 bis 3.8.

Bevorzugt enthält das im beschriebenen Verfahren eingesetzte Amingemisch zusätzlich mindestens ein dialkyliertes Amin der Formel (IIIa),

Y-NH-A²-NH-Y (IIIa)

wobei A² und Y die bereits genannten Bedeutungen aufweisen.

Bevorzugt ist das im beschriebenen Verfahren eingesetzte Amin der Formel (III) und das gegebenenfalls zusätzlich vorhandene Amin der Formel (IIIa) Bestandteil einer Reaktionsmischung aus der partiellen Alkylierung von mindestens einem Amin der Formel A²(NH₂)₂ mit mindestens einem Alkylierungsmittel.
Bevorzugt ist die Alkylierung eine reduktive Alkylierung, wobei als Alkylierungsmittel ein Aldehyd oder Keton und Wasserstoff eingesetzt wird.
Dabei ist der Aldehyd bzw. das Keton bevorzugt ausgewählt aus der Gruppe bestehend aus 2-Ethylhexanal, Cyclohexylcarbaldehyd, Benzaldehyd, Acetophenon und 1-Naphthaldehyd, insbesondere Benzaldehyd.
Bevorzugt wird die reduktive Alkylierung in Anwesenheit eines geeigneten Katalysators durchgeführt. Als Katalysator bevorzugt sind Palladium auf Kohle (Pd/C), Platin auf Kohle (Pt/C), Adams-Katalysator oder Raney-Nickel, insbesondere Palladium auf Kohle oder Raney-Nickel.
Bei Verwendung von molekularem Wasserstoff wird die reduktive Alkylierung bevorzugt in einer Druckapparatur bei einem Wasserstoff-Druck von 5 bis 150 bar, insbesondere 10 bis 100 bar, gearbeitet. Dies kann in einem Batch-Prozess oder bevorzugt in einem kontinuierlichen Prozess erfolgen.
Die reduktive Alkylierung wird bevorzugt bei einer Temperatur im Bereich von 40 bis 120 °C, insbesondere 60 bis 100 °C, durchgeführt.

Insbesondere für den Fall, dass A² für einen Alkylen-Rest mit 2 bis 6, insbesondere 2 oder 3, C-Atomen, steht, wird das Amin der Formel A²(NH₂)₂ bevorzugt im stöchiometrischen Überschuss gegenüber dem Aldehyd oder Keton eingesetzt und nach der Alkylierung nicht umgesetztes Amin der Formel A²(NH₂)₂ zumindest teilweise aus der Reaktionsmischung entfernt, insbesondere mittels Stripping. Falls gewünscht, kann die Reaktionsmischung anschliessend weiter gereinigt werden, insbesondere indem das Amin der Formel (III) mittels Destillation zumindest teilweise vom Amin der Formel (IIIa) befreit wird.
Bevorzugt weist der erfindungsgemässe Härter einen Gehalt am Amin der Formel A²(NH₂)₂, bei welchem A² für einen Alkylen-Rest mit 2 bis 6, insbesondere 2 oder 3, C-Atomen, steht, von weniger als 2.5 Gewichts-%, bevorzugt weniger als 1 Gewichts-%, auf. Ein solcher Härter ermöglicht Epoxidharz-Produkte mit besonders schönen Oberflächen.

Für den Fall, dass A² für einen Alkylen-Rest mit 7 bis 10 C-Atomen steht, wird das zugrunde liegende Amin der Formel A²(NH₂)₂ für die reduktive Alkylierung bevorzugt in einer solchen Menge eingesetzt, dass pro Mol Amin der Formel A²(NH₂)₂ 1 bis 1.8, insbesondere 1 bis 1.5, Mol Aldehyd oder Keton vorhanden sind.

Ein weiterer Gegenstand der Erfindung ist das Reaktionsprodukt aus dem beschriebenen Verfahren zur Herstellung des erfindungsgemässen Härters. Insbesondere enthält dieses Reaktionsprodukt zusätzlich zum Addukt-Amin der Formel (I) mindestens ein Amin der Formel (II), mindestens ein Amin der Formel (III), mindestens ein Addukt-Amin der Formel (V) und mindestens ein Addukt-Amin der Formel (VI), 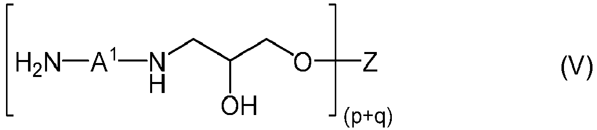 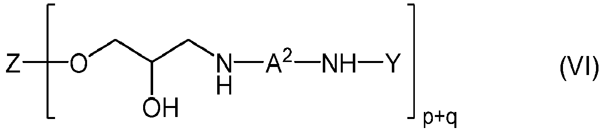 wobei A¹, A², Y, Z, p und q die bereits genannten Bedeutungen aufweisen.

Weiterhin enthält das Reaktionsprodukt gegebenenfalls mindestens ein Amin der Formel (IIIa) und gegebenenfalls mindestens ein Addukt-Amin aus der Umsetzung eines Amins der Formel (IIIa) mit dem Glycidylether der Formel (IV).

Zusätzlich enthält das Reaktionsprodukt typischerweise Anteile von weiteren Addukt-Aminen, insbesondere Anteile von höheren Addukt-Aminen, wie sie durch Reaktion eines Amins der Formel (II) oder (III) mit mehr als einem Glycidylether der Formel (III) entstehen.

Der beschriebene Härter enthält gegebenenfalls weitere Amine, welche nicht den zur Herstellung des Addukts der Formel (I) eingesetzten Aminen der Formel (II) oder (III) oder (IIIa) oder von damit aus der Umsetzung mit dem Glycidylether der Formel (IV) abgeleiteten Addukt-Aminen entsprechen.

Der beschriebene Härter enthält gegebenenfalls mindestens einen Beschleuniger. Als Beschleuniger bevorzugt sind Säuren oder zu Säuren hydrolysierbare Verbindungen, tertiäre Amine, Salze von tertiären Aminen, quaternäre Ammoniumsalze, Amidine, Guanidine, Phenole, Mannich-Basen, Phosphite oder Mercaptogruppen aufweisende Verbindungen, insbesondere Säuren, tertiäre Amine oder Mannich-Basen. Besonders bevorzugt sind Salicylsäure oder 2,4,6-Tris(dimethylaminomethyl)phenol oder eine Kombination davon.

Der beschriebene Härter enthält gegebenenfalls mindestens einen Verdünner, insbesondere Benzylalkohol, 2-Phenoxyethanol, Cardanol (aus Cashewschalen-ÖI, enthaltend als Hauptbestandteil 3-(8,11,14-Pentadecatrienyl)phenol), styrolisiertes Phenol oder phenolgruppenhaltige aromatische Kohlenwasserstoffharze, insbesondere Benzylalkohol oder Cardanol.

Ein weiterer Gegenstand der Erfindung ist eine Epoxidharz-Zusammensetzung umfassend
- eine Harz-Komponente enthaltend mindestens ein Epoxidharz und
- eine Härter-Komponente enthaltend den vorgängig beschriebenen Härter und/oder das Reaktionsprodukt aus dem beschriebenen Verfahren.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.
Als Epoxidharz besonders geeignet sind sogenannte Polyepoxid-Flüssigharze, im folgenden als "Flüssigharz" bezeichnet. Diese weisen eine Glasübergangstemperatur unterhalb von 25°C auf.

Ebenfalls möglich als Epoxidharz sind sogenannte Festharze, welche eine Glasübergangstemperatur oberhalb von 25°C aufweisen und sich zu bei 25°C schüttfähigen Pulvern zerkleinern lassen.

Als Epoxidharz in der Harz-Komponente bevorzugt ist ein Flüssigharz auf der Basis eines Bisphenols, insbesondere ein Diglycidylether von Bisphenol-A, Bisphenol-F oder Bisphenol-A/F, wie sie kommerziell beispielsweise von Dow, Huntsman oder Momentive erhältlich sind. Diese Flüssigharze weisen eine für Epoxidharze niedrige Viskosität und im ausgehärteten Zustand gute Eigenschaften als Beschichtung auf. Sie können Anteile von Bisphenol A-Festharz oder Novolak-Glycidylethern enthalten.

Die Harz-Komponente kann zusätzlich einen Reaktivverdünner, insbesondere einen mindestens eine Epoxidgruppe aufweisenden Reaktivverdünner, enthalten, insbesondere ein Glycidylether von ein- oder mehrwertigen Phenolen oder aliphatischen oder cycloaliphatischen Alkoholen, insbesondere Butandioldiglycidylether, Hexandioldiglycidylether, Polyoxypropylenglycoldiglycidylether, Cardanolglycidylether oder Glycidylether von natürlichen Alkoholen wie C₈- bis C₁₀-, C₁₂- bis C₁₄- oder C₁₃- bis C₁₅-Alkylglycidylether.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, insbesondere Lösemittel, Verdünner, Filmbildehilfsmittel, Extender, Polymere, anorganische und/oder organische Füllstoffe, Fasern, Pigmente, Rheologie-Modifizierer, Haftverbesserer, Stabilisatoren gegen Oxidation, Wärme, Licht oder UV-Strahlung, flammhemmende Substanzen, oberflächenaktive Substanzen oder Biozide.

In der Epoxidharz-Zusammensetzung liegt das Verhältnis der Anzahl von gegenüber Epoxidgruppen reaktiven Gruppen gegenüber der Anzahl Epoxidgruppen bevorzugt im Bereich von 0.5 bis 1.5, insbesondere 0.7 bis 1.2.

Die Harz- und die Härter-Komponente der Epoxidharz-Zusammensetzung werden jeweils in einem eigenen Gebinde gelagert. Weitere Bestandteile der Epoxidharz-Zusammensetzung können als Bestandteil der Harz- oder der Härter-Komponente vorhanden sein, wobei gegenüber Epoxidgruppen reaktive weitere Bestandteile bevorzugt ein Bestandteil der Härter-Komponente sind. Ebenfalls möglich ist, dass weitere Bestandteile als eigene, weitere Komponente vorhanden sind.
Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.
Zur Anwendung der Epoxidharz-Zusammensetzung werden die Komponenten kurz vor oder während der Applikation miteinander vermischt.
Die Vermischung der Komponenten erfolgt mittels eines geeigneten Verfahrens; sie kann kontinuierlich oder batchweise erfolgen. Die Vermischung erfolgt insbesondere bei Umgebungstemperatur, welche typischerweise im Bereich von etwa 5 bis 50°C, bevorzugt bei etwa 10 bis 30°C, liegt.
Mit der Vermischung der beiden Komponenten beginnt die Aushärtung durch chemische Reaktion. Dabei reagieren die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis hauptsächlich dieser Reaktion polymerisiert die Zusammensetzung und härtet schliesslich aus.
Die Aushärtung erfolgt typischerweise bei einer Temperatur im Bereich von 0 bis 150 °C. Bevorzugt erfolgt sie bei Umgebungstemperatur und erstreckt sich typischerweise über einige Tage bis Wochen. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips oder Natursteine wie Granit oder Marmor;
- Metalle oder Legierungen wie Aluminium, Eisen, Stahl oder Buntmetalle, oder oberflächenveredelte Metalle oder Legierungen wie verzinkte oder verchromte Metalle;
- Leder, Textilien, Papier, Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites;
- Kunststoffe, insbesondere Hart- oder Weich-PVC, ABS, Polycarbonat (PC), Polyamid (PA), Polyester, PMMA, Epoxidharze, PUR, POM, PO, PE, PP, EPM oder EPDM, wobei die Kunststoffe gegebenenfalls mittels Plasma, Corona oder Flammen oberflächenbehandelt sind;
- Faserverstärkte Kunststoffe, wie Kohlefaser-verstärkte Kunststoffe (CFK), Glasfaser-verstärkte Kunststoffe (GFK) oder Sheet Moulding Compounds (SMC);
- beschichtete Substrate, wie pulverbeschichtete Metalle oder Legierungen;
- Farben oder Lacke.
Die Substrate können bei Bedarf vor dem Applizieren der Epoxidharz-Zusammensetzung vorbehandelt werden.

Die beschriebene Epoxidharz-Zusammensetzung ist vorteilhaft verwendbar als Faserverbundmatrix für Faserverbundwerkstoffe (Composites) wie insbesondere CFK oder GFK, oder als Vergussmasse oder Giessharz, Dichtstoff, Klebstoff, Belag, Beschichtung, Anstrich, Lack, Versiegelung, Grundierung oder Primer.

Insbesondere verwendbar ist sie als Belag, Beschichtung, Anstrich, Lack, Versiegelung, Grundierung oder Primer für Bau- und Industrieanwendungen, insbesondere als Bodenbelag oder Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle, Kunststoffe oder Holz, beispielsweise zur Oberflächenversiegelung von Holzkonstruktionen, Fahrzeugen, Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, oder als Voranstrich, Haftanstrich, Korrosionsschutz-Primer oder zur Hydrophobierung von Oberflächen.

Insbesondere verwendbar ist sie weiterhin als Klebstoff, insbesondere als Karrosserieklebstoff, Sandwichelementklebstoff, Halbschalenklebstoff für Rotorblätter von Windkraftanlagen, Brückenelementklebstoff oder Verankerungsklebstoff.

Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft wird die beschriebene Epoxidharz-Zusammensetzung als Beschichtung verwendet.
Als Beschichtung wird die Epoxidharz-Zusammensetzung vorteilhaft in einem Verfahren zum Beschichten eingesetzt, wobei sie eine flüssige Konsistenz mit niedriger Viskosität und guten Verlaufseigenschaften aufweist und insbesondere als selbstverlaufende oder thixotropierte Beschichtung auf überwiegend ebene Flächen oder als Anstrich appliziert wird. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 0.3 bis 4 Pa·s, besonders bevorzugt 0.3 bis 2 Pa·s, insbesondere 0.3 bis 1.7 Pa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt insbesondere durch Aufgiessen auf das zu beschichtende Substrat und anschliessendem gleichmässigem Verteilen mit Hilfe beispielsweise eines Rakels oder einer Zahntraufel. Die Applikation kann auch mit einem Pinsel oder Roller oder als Spritzapplikation erfolgen, beispielsweise als Korrosionsschutzbeschichtung auf Stahl.

Aus der Anwendung der Epoxidharz-Zusammensetzung entsteht ein Artikel umfassend die ausgehärtete Zusammensetzung aus der Aushärtung der beschriebenen Epoxidharz-Zusammensetzung. Die ausgehärtete Zusammensetzung liegt dabei insbesondere in Form einer Beschichtung vor.

Die beschriebene Epoxidharz-Zusammensetzung zeichnet sich durch vorteilhafte Eigenschaften aus. Sie ist geruchs- und emissionsarm, besonders gut verarbeitbar, benetzt die Substrate gut und härtet schnell und störungsfrei aus, auch bei kühlen Umgebungstemperaturen. Bei der Aushärtung entstehen qualitativ hochstehende Epoxidharz-Produkte mit hoher Härte und ebenmässiger, nichtklebriger und glänzender Oberfläche.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"AHEW" steht für das Aminwasserstoff-Equivalentgewicht.
"EEW" steht für das Epoxid-Equivalentgewicht.
Als "Normklima" wird eine Temperatur von 23±1 °C und eine relative Luftfeuchtigkeit von 50±5% bezeichnet. "NK" steht für "Normklima".

### Beschreibung der Messmethoden:

Die Viskosität wurde auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10 s⁻¹) gemessen.

Die **Aminzahl** wurde durch Titration bestimmt (mit 0.1N HClO₄ in Essigsäure gegen Kristallviolett).

### Verwendete Substanzen:

| | |
|---|---|
| Araldite^{®} GY 250: | Bisphenol-A-Diglycidylether, EEW ca. 187.5 g/Eq (von Huntsman) |
| Araldite^{®} DY-E: | Monoglycidylether von C₁₂- bis C₁₄-Alkoholen, EEW ca. 290 g/Eq (von Huntsman) |
| IPDA | 3-Aminomethyl-3,5,5-trimethylcyclohexylamin, AHEW 42.6 g/Eq (Vestamin^{®} IPD von Evonik) |
| 1,3-BAC: | 1,3-Bis(aminomethyl)cyclohexan, AHEW 35.5 g/Eq (von Mitsubishi Gas Chemical) |
| MXDA: | 1,3-Bis(aminomethyl)benzol, AHEW 34 g/Eq (von Mitsubishi Gas Chemical). |
| Cardanol: | aus Cashewschalen-Öl, enthaltend als Hauptbestandteil 3-(8,11,14-Pentadecatrienyl)phenol), Cardolite^{®} NX-2026 (von Cardolite Corp.) |

### N-Benzyl-1,2-propandiamin:

In einem Rundkolben wurden 444.8 g (6 mol) 1,2-Propandiamin unter Stickstoffatmosphäre bei Raumtemperatur vorgelegt. Unter gutem Rühren wurde langsam eine Lösung aus 212.2 g (2 mol) Benzaldehyd in 1'500 ml Isopropanol dazugetropft und 2 Stunden nachgerührt. Die Reaktionsmischung wurde anschliessend bei einem Wasserstoff-Druck von 90 bar, einer Temperatur von 85 °C und einem Fluss von 5 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die hydrierte Lösung am Rotationsverdampfer bei 65 °C eingeengt, wobei unreagiertes 1,2-Propandiamin und Isopropanol entfernt wurden. Es wurde eine klare, leicht gelbliche Flüssigkeit erhalten. Davon wurden 300 g bei 80 °C unter Vakuum destilliert, wobei 237.5 g Destillat bei einer Dampftemperatur von 60 bis 63 °C und 0.08 bis 0.09 bar aufgefangen wurden. Erhalten wurde eine farblose Flüssigkeit mit einer Aminzahl von 682 mg KOH/g, welche gemäss ¹H-NMR eine Mischung aus N¹-Benzyl-1,2-propandiamin und N²-Benzyl-1,2-propandiamin im Verhältnis von ca. 2/1 darstellte und eine GC-Reinheit von >97% aufwies.

### Herstellung von Härtern enthaltend Addukt-Amine der Formel (I):

### Addukt A1:

17.0 g (0.1 mol) IPDA und 16.4 g (0.1 mol) N-Benzyl-1,2-propandiamin wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 494 mg KOH/g, einer Viskosität von 2.03 Pa·s bei 20 °C und einem AHEW von ca. 68.7 g/Eq.

### Addukt A2:

25.6 g (0.15 mol) IPDA und 8.2 g (0.05 mol) N-Benzyl-1,2-propandiamin wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 497 mg KOH/g, einer Viskosität von 4.90 Pa·s bei 20 °C und einem AHEW von ca. 64.2 g/Eq.

### Addukt A3:

8.5 g (0.05 mol) IPDA und 24.7 g (0.15 mol) N-Benzyl-1,2-propandiamin wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 501 mg KOH/g, einer Viskosität von 1.04 Pa·s bei 20 °C und einem AHEW von ca. 74.0 g/Eq.

### Herstellung von Addukten ohne Addukt-Amin der Formel (I) (Vergleich):

### Addukt R1:

34.1 g (0.2 mol) IPDA wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 497 mg KOH/g, einer Viskosität von 13.70 Pa·s bei 20 °C und einem AHEW von ca. 60.2 g/Eq.

### Addukt R2:

32.9 g (0.2 mol) N-Benzyl-1,2-propandiamin wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 503 mg KOH/g, einer Viskosität von 0.53 Pa·s bei 20 °C und einem AHEW von ca. 80.2 g/Eq.

### Addukt R3:

17.0 g (0.1 mol) IPDA und 13.6 g (0.1 mol) MXDA wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 534 mg KOH/g, einer Viskosität von 2.80 Pa·s bei 20 °C und einem AHEW von ca. 55.7 g/Eq.

### Addukt R4:

17.0 g (0.1 mol) IPDA und 14.2 g (0.1 mol) 1,3-BAC wurden unter Stickstoffatmosphäre vorgelegt, auf 70 °C erwärmt und dann unter gutem Rühren langsam mit 10.7 g (0.057 mol Epoxidgruppen) Araldite^{®} GY 250 versetzt, wobei die Temperatur der Reaktionsmischung 70 bis 80 °C betrug. Nach 1 Stunde bei 80°C wurde die Reaktionsmischung abgekühlt. Erhalten wurde eine klare, leicht gelbliche Flüssigkeit mit einer Aminzahl von 529 mg KOH/g, einer Viskosität von 3.79 Pa·s bei 20 °C und einem AHEW von ca. 56.5 g/Eq.

### Herstellung von Epoxidharz-Zusammensetzungen:

### Beispiele 1 bis 16:

Für jedes Beispiel wurden die in den Tabellen 1 bis 2 angegebenen Inhaltsstoffe in den angegebenen Mengen (in Gewichtsteilen) der Härter-Komponente mittels eines Zentrifugalmischers (SpeedMixer™ DAC 150, FlackTek Inc.) vermischt und unter Ausschluss von Feuchtigkeit aufbewahrt.
Ebenso wurden die in den Tabellen 1 bis 2 angegebenen Inhaltsstoffe der Harz-Komponente verarbeitet und aufbewahrt.
Anschliessend wurden die beiden Komponenten jeder Zusammensetzung mittels des Zentrifugalmischers zu einer homogenen Flüssigkeit verarbeitet und diese unverzüglich folgendermassen geprüft:
10 Minuten nach dem Vermischen wurde die Viskosität bei 20°C bestimmt **("Viskosität (10')").**
Ein erster Film wurde in einer Schichtdicke von 500 µm auf eine Glasplatte aufgezogen und dieser Normklima gelagert bzw. ausgehärtet. An diesem Film wurde die **Königshärte** (Pendelhärte nach König, gemessen nach DIN EN ISO 1522) nach 1 Tag ("Königshärte (1d NK)"), nach 2 Tagen ("Königshärte (2d NK)"), nach 4 Tagen ("Königshärte (4d NK)"), nach 7 Tagen ("Königshärte (7d NK)") und nach 14 Tagen ("Königshärte (14d NK)") bestimmt. Nach 14 Tagen wurde der Aspekt des Films beurteilt (in der Tabelle mit "Aspekt (NK)" bezeichnet). Als "schön" wurde dabei ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet.
Ein zweiter Film wurde in einer Schichtdicke von 500 µm auf eine Glasplatte aufgezogen und dieser unmittelbar nach dem Applizieren während 7 Tagen bei 8 °C und 80 % relativer Feuchtigkeit und anschliessend während 3 Wochen im NK gelagert, beziehungsweise ausgehärtet. 24 Stunden nach der Applikation wurde ein Flaschendeckel aus Polypropylen auf den Film aufgesetzt, unter welchem ein feuchtes Schwämmchen platziert war. Nach weiteren 24 Stunden wurde das Schwämmchen und der Deckel entfernt und an einer neuen Stelle des Films platziert, wo es nach 24 Stunden wieder entfernt und neu platziert wurde, insgesamt 4 mal. Anschliessend wurde der Aspekt dieses Films beurteilt (in den Tabellen mit "Aspekt (8°/80%)" bezeichnet), auf die gleiche Weise wie für den Aspekt (NK) beschrieben. Dabei wurde jeweils auch die Anzahl weisser Marken angegeben, die im Film durch das feuchte Schwämmchen entstanden waren. An den so ausgehärteten Filmen wurde wiederum die Königshärte bestimmt, jeweils nach 7 Tagen bei 8 °C und 80 % relativer Feuchtigkeit ("Königsh. (7d 8°/80%)"), dann nach weiteren 2 Tagen im NK ("Königsh. (+2d NK)"), 7 Tagen im NK ("Königsh. (+7d NK)") und 14d im NK ("Königsh. (+14d NK)").
Als Mass für die Vergilbung wurde weiterhin die Farbveränderung nach Belastung in einem Bewitterungstester bestimmt. Dazu wurde ein weiterer Film in einer Schichtdicke von 500 µm auf eine Glasplatte aufgezogen und dieser im Normklima während 2 Wochen gelagert bzw. ausgehärtet und anschliessend in einem Bewitterungstester des Typs Q-Sun Xenon Xe-1 mit optischem Filter Q-SUN Daylight-Q und einer Xenon Lampe mit einer Lichtstärke von 0.51 W/m² bei 340 nm bei einer Temperatur von 65°C während 72 Stunden belastet **(Q-Sun (72h)).** Anschliessend wurde der Farbunterschied ΔE des so belasteten Films im Vergleich zum entsprechenden nicht belasteten Film mittels einem Colorimeter NH310 von Shenzen 3NH Technology Co. LTD, ausgerüstet mit Silicon Photoelectric Diode Detector, Light Source A, Color Space Measurement Interface CIE L*a*b*C*H*, bestimmt. ΔE-Werte von 0.5 bis 1.5 stehen dabei für einen geringfügigen Farbunterschied, 1.5 bis 3 für einen leichten Farbunterschied, 3 bis 6 für einen deutlich sichtbaren Farbunterschied und mehr als 6 für einen grossen Farbunterschied.
Die Resultate sind in den Tabellen 1 bis 2 angegeben.
Die mit "(Ref.)" bezeichneten Beispiele sind Vergleichsbeispiele.

**Tabelle 1: Zusammensetzung und Eigenschaften der Beispiele 1 bis 8.**

| | **Beispiel** | **1** | **2 (Ref.)** | **3** | **4 (Ref.)** | **5** | **6 (Ref.)** | **7** | **8 (Ref.)** |
|---|---|---|---|---|---|---|---|---|---|
| **Harz-Komp.:** | | | | | | | | | |
| | Araldite^{®} GY 250 | 167.2 | 167.2 | 167.2 | 167.2 | 167.2 | 167.2 | 167.2 | 167.2 |
| | Araldite^{®} DY-E | 31.8 | 31.8 | 31.8 | 31.8 | 31.8 | 31.8 | 31.8 | 31.8 |
| **Härter-Komp.:** | | | | | | | | | |
| | Addukt **A1** | 68.7 | - | 68.7 | - | - | - | - | - |
| | Addukt **A2** | - | - | - | - | 64.2 | - | - | - |
| | Addukt **A3** | - | - | - | - | - | - | 74.0 | - |
| | Addukt **R1** | - | 30.1 | - | 30.1 | - | 45.2 | - | 15.1 |
| | Addukt **R2** | - | 40.1 | - | 40.1 | - | 20.1 | - | 60.2 |
| | Benzylalkohol | 29.7 | 29.7 | - | - | 27.7 | 27.7 | - | - |
| | Cardanol | - | - | 29.7 | 29.7 | - | - | 31.7 | 31.7 |
| Viskosität (10') [Pa·s] | | 1.15 | 1.27 | 2.02 | 2.17 | 1.50 | 1.81 | 1.57 | 1.70 |
| Königshärte [s] | (1d NK) | 27 | 29 | 63 | 78 | 45 | 36 | 49 | 43 |
| | (2d NK) | 94 | 104 | 122 | 144 | 122 | 127 | 102 | 109 |
| | (4d NK) | 164 | 161 | 162 | 158 | 174 | 168 | 150 | 140 |
| | (7d NK) | 181 | 179 | 176 | 183 | 188 | 174 | 167 | 162 |
| | (14d NK) | 190 | 185 | 189 | 192 | 206 | 196 | 162 | 179 |
| Aspekt (NK) | | schön | schön | schön | schön | schön | schön | schön | schön |
| Q-Sun (72h) ΔE | | 2.1 | 2.8 | 2.3 | 2.2 | 2.3 | 2.1 | 2.1 | 3.1 |
| Königsh. [s] | (7d 8°/80%) | 38 | 32 | 59 | 60 | 46 | 36 | 45 | 38 |
| | (+2d NK) | 123 | 136 | 127 | 118 | 130 | 134 | 119 | 127 |
| | (+7d NK) | 164 | 176 | 155 | 168 | 168 | 167 | 154 | 155 |
| | (+14d NK) | 179 | 193 | 167 | 179 | 178 | 179 | 155 | 162 |
| Aspekt (8°/80%) | | schön | schön | schön | I.Zch.¹ | I.Zch.¹ | matt / I.Zch.¹ | schön | schön |
| Anzahl Marken | | 1 | 1 | 1 | 1 | 1 | 1 | 1 | 1 |

| | | | | | | | | | |
|---|---|---|---|---|---|---|---|---|---|
| ¹ leichte Zeichnung auf der Oberfläche | | | | | | | | | |

**Tabelle 2: Zusammensetzung und Eigenschaften der Beispiele 9 bis 16.**

| | **Beispiel** | **9 (Ref.)** | **10 (Ref.)** | **11 (Ref.)** | **12 (Ref.)** | **13 (Ref.)** | **14 (Ref.)** | **15 (Ref.)** | **16 (Ref.)** |
|---|---|---|---|---|---|---|---|---|---|
| **Harz-Komp.:** | | | | | | | | | |
| | Araldite^{®} GY 250 | 167.2 | 167.2 | 167.2 | 167.2 | 167.2 | 167.2 | 167.2 | 167.2 |
| | Araldite^{®} DY-E | 31.8 | 31.8 | 31.8 | 31.8 | 31.8 | 31.8 | 31.8 | 31.8 |
| **Härter-Komp.:** | | | | | | | | | |
| | Addukt **R1** | 60.2 | - | - | - | 60.2 | - | - | - |
| | Addukt **R2** | - | 80.2 | - | - | - | 80.2 | - | - |
| | Addukt **R3** | - | - | 55.7 | - | - | - | 55.7 | - |
| | Addukt **R4** | - | - | - | 56.5 | - | - | - | 56.5 |
| | Benzylalkohol | 25.8 | 34.4 | 23.9 | 24.2 | - | - | - | - |
| | Cardanol | - | - | - | - | 25.8 | 34.4 | 23.9 | 24.2 |
| Viskosität (10') [Pa·s] | | 3.20 | 0.90 | 2.24 | 3.17 | 6.24 | 1.86 | 4.58 | 5.90 |
| Königshärte [s] | (1d NK) | 63 | 6 | 67 | 80 | 97 | 31 | 123 | 127 |
| | (2d NK) | 140 | 25 | 111 | 108 | 148 | 71 | 148 | 153 |
| | (4d NK) | 185 | 66 | 164 | 160 | 179 | 125 | 176 | 174 |
| | (7d NK) | 195 | 94 | 179 | 178 | 198 | 145 | 179 | 180 |
| | (14d NK) | 200 | 111 | 174 | 179 | 195 | 160 | 176 | 176 |
| Aspekt (NK) | | schön | schön | schön | I.Zch.¹ | schön | schön | I.Zch.¹ | I.Zch.¹ |
| Q-Sun (72h) ΔE | | 1.8 | 3.8 | 5.2 | 3.4 | 2.3 | 3.1 | 3.8 | 2.1 |
| Königsh. [s] | (7d 8°/80%) | 57 | 11 | 49 | 60 | 70 | 34 | 70 | 83 |
| | (+2d NK) | 126 | 55 | 92 | 97 | 109 | 95 | 105 | 109 |
| | (+7d NK) | 154 | 123 | 140 | 150 | 132 | 119 | 139 | 91 |
| | (+14d NK) | 175 | 122 | 154 | 154 | 136 | 120 | 154 | 126 |
| Aspekt (8°/80%) | | matt | schön | matt / Zch.² | matt | matt | schön | Zch.² | matt |
| Anzahl Marken | | 4 | keine | 4 | 4 | 4 | 1 | 4 | 4 |

| | | | | | | | | | |
|---|---|---|---|---|---|---|---|---|---|
| ¹ leichte Zeichnung auf der Oberfläche ² trübe Zeichnung auf der Oberfläche | | | | | | | | | |

## Patentansprüche

1. Härter für Epoxidharze enthaltend mindestens ein Addukt-Amin der 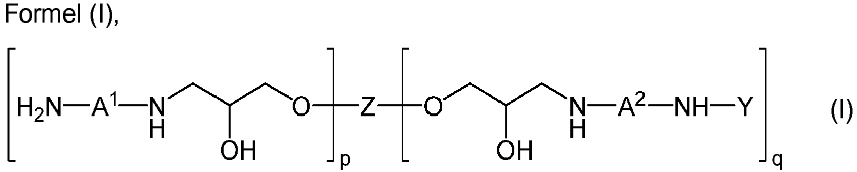 wobei
A¹ für einen Alkylen-Rest mit 6 bis 15 C-Atomen, welcher gegebenenfalls cyclische Anteile und gegebenenfalls sekundäre oder tertiäre Aminogruppen aufweist, steht,
A² für einen von A¹ verschiedenen Alkylen-Rest mit 2 bis 10 C-Atomen steht,
Y für einen Alkyl- oder Cycloalkyl- oder Aralkyl-Rest mit 1 bis 20 C-Atomen steht,
Z für einen (p+q)-wertigen, gegebenenfalls Ether-Sauerstoff aufweisenden Kohlenwasserstoff-Rest mit einem Molekulargewicht im Bereich von 56 bis 1'500 g/mol steht, und
p und q unabhängig voneinander für 1 oder 2 oder 3 stehen und (p+q) für 2 oder 3 oder 4 steht.

2. Härter gemäss Anspruch 1, **dadurch gekennzeichnet, dass** A¹ ausgewählt ist aus der Gruppe bestehend aus 2-Methyl-1,5-pentylen, 1,6-Hexylen, 2,2(4),4-Trimethyl-1,6-hexamethylen, 1,3-Cyclohexylen-bis(methylen), 1,4-Cyclohexylen-bis(methylen), 1,3-Phenylen-bis(methylen), 1,4-Phenylen-bis(methylen), 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 3-Aza-1,5-pentylen, 3,6-Diaza-1,8-octylen, 3,6,9-Triaza-1,11-undecylen, 3,6,9,12-Tetraaza-1,14-tetradecylen, 3,6,9,12,15-Pentaaza-1,17-heptadecylen, 4-Aza-2,6-heptylen, 4-Aza-1,7-heptylen, 4,7-Diaza-1,10-decylen und 7-Aza-1,13-tridecylen.

3. Härter gemäss einem der vorhergehenden Ansprüche, **dadurch gekennzeichnet, dass** A² für einen Alkylen-Rest mit 2 bis 6, insbesondere 2 oder 3, C-Atomen steht.

4. Härter gemäss einem der vorhergehenden Ansprüche, **dadurch gekennzeichnet, dass** A² für 1,2-Propylen steht und A¹ ausgewählt ist aus der Gruppe bestehend aus 2-Methyl-1,5-pentylen, 1,6-Hexylen, 2,2(4),4-Trimethyl-1,6-hexamethylen, 1,3-Cyclohexylen-bis(methylen), 1,4-Cyclohexylen-bis(methylen), 1,3-Phenylen-bis(methylen), 1,4-Phenylen-bis(methylen), 1,2-Cyclohexylen, 1,3-Cyclohexylen, 1,4-Cyclohexylen, (1,5,5-Trimethylcyclohexan-1-yl)methan-1,3, 4(2)-Methyl-1,3-cyclohexylen, 3-Aza-1,5-pentylen, 3,6-Diaza-1,8-octylen, 3,6,9-Triaza-1,11-undecylen, 3,6,9,12-Tetraaza-1,14-tetradecylen, 3,6,9,12,15-Pentaaza-1,17-heptadecylen, 4-Aza-2,6-heptylen, 4-Aza-1,7-heptylen, 4,7-Diaza-1,10-decylen und 7-Aza-1,13-tridecylen.

5. Härter gemäss einem der vorhergehenden Ansprüche, **dadurch gekennzeichnet, dass** Y für einen Rest der Formel 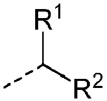 steht, wobei
R¹ für einen Wasserstoff-Rest oder für Methyl oder Phenyl steht, und
R² für einen fünf- oder sechs- oder siebengliedrigen Cycloalkyl- oder Aryl-Rest mit 4 bis 7 C-Atomen steht, der gegebenenfalls Alkyl-substituiert ist.

6. Härter gemäss einem der Ansprüche 1 bis 4, **dadurch gekennzeichnet, dass** Y ausgewählt ist aus der Gruppe bestehend aus 2-Ethylhexyl, 2-Phenylethyl, Cyclohexylmethyl, Benzyl, 1-Phenylethyl und 1-Naphthylmethyl.

7. Härter gemäss einem der vorhergehenden Ansprüche, **dadurch gekennzeichnet, dass** Z für den Rest eines zwei-, drei- oder vierwertigen Arylglycidylethers nach Entfernung der Glycidoxygruppen steht.

8. Verfahren zur Herstellung des Härters gemäss einem der vorhergehenden Ansprüche, **dadurch gekennzeichnet, dass** ein Amingemisch enthaltend mindestens ein Amin der Formel (II) und mindestens ein monoalkyliertes Amin der Formel (III) mit mindestens einem Glycidylether der Formel (IV) umgesetzt wird.
H₂N-A¹-NH₂ (II)
H₂N-A²-NH-Y (III)

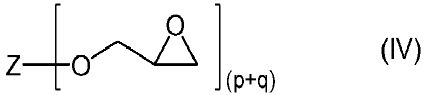

9. Verfahren gemäss Anspruch 8, **dadurch gekennzeichnet, dass** das Molverhältnis der Summe aus Amin der Formel (II) und Amin der Formel (III) gegenüber den Epoxidgruppen im Bereich von 1.5/1 bis 15/1 liegt.

10. Verfahren gemäss einem der Ansprüche 8 bis 9, **dadurch gekennzeichnet, dass** das im Verfahren eingesetzte Amingemisch zusätzlich mindestens ein dialkyliertes Amin der Formel (IIIa) enthält.
Y-NH-A²-NH-Y (IIIa)

11. Verfahren gemäss einem der Ansprüche 8 bis 10, **dadurch gekennzeichnet, dass** das im Verfahren eingesetzte Amin der Formel (III) und das gegebenenfalls zusätzlich vorhandene Amin der Formel (IIIa) Bestandteil einer Reaktionsmischung aus der partiellen Alkylierung von mindestens einem Amin der Formel A²(NH₂)₂ mit mindestens einem Alkylierungsmittel ist.

12. Reaktionsprodukt aus dem Verfahren gemäss einem der Ansprüche 8 bis 11.

13. Epoxidharz-Zusammensetzung umfassend
- eine Harz-Komponente enthaltend mindestens ein Epoxidharz und
- eine Härter-Komponente enthaltend den Härter gemäss einem der Ansprüche 1 bis 7 und/oder das Reaktionsprodukt gemäss Anspruch 12.

14. Verwendung der Epoxidharz-Zusammensetzung gemäss Anspruch 13 als Beschichtung.

15. Ausgehärtete Zusammensetzung erhalten aus der Aushärtung einer Epoxidharz-Zusammensetzung gemäss Anspruch 13.
